# EUROPEAN PATENT APPLICATION

(11) **EP 4 621 567 A1**
(43) Date of publication of application: **24.09.2025**
(21) Application number: 23910817.8
(22) Date of filing: 28.12.2023
(51) Int. Cl.: G06F 9/455

(54) **ACCELERATED STARTUP METHOD FOR VIRTUAL MACHINE AND RELATED DEVICE THEREFOR**

(30) Priority: 30.12.2022 CN 202211733967
(71) Applicant: Huawei Cloud Computing Technologies Co., Ltd., Guiyang, Guizhou 550025 (CN)
(72) Inventor: SHI, Ning, Guiyang, Guizhou 550025 (CN); LIU, Yongcong, Guiyang, Guizhou 550025 (CN); ZHAO, Kewei, Guiyang, Guizhou 550025 (CN); JI, Chengyuan, Guiyang, Guizhou 550025 (CN)
(74) Representative: MERH-IP Matias Erny Reichl Hoffmann Patentanwälte PartG mbB
(86) International application number: PCT/CN2023/142675
(87) International publication number: WO 2024/140900

(57) **Abstract**

This application discloses a virtual machine startup acceleration method and a related device thereof, to significantly reduce a quantity of times that an image cache is accessed, preventing hot spot occurrence in the image cache. The method in this application includes: receiving a first read request of a first virtual machine for a first system disk; if it is determined that a linked clone volume for managing the first system disk does not retain first image data indicated by the first read request, notifying the linked clone volume to obtain the first image data from an image cache and store the first image data; notifying the linked clone volume to send the first image data to the first system disk; and notifying the first system disk to send the first image data to the first virtual machine.

## Description

This application claims priority to Chinese Patent Application No. 202211733967.1, filed with the China National Intellectual Property Administration on December 30, 2022 and entitled "VIRTUAL MACHINE STARTUP ACCELERATION METHOD AND RELATED DEVICE THEREOF", which is incorporated herein by reference in its entirety.

### TECHNICAL FIELD

Embodiments of this application relate to the field of cloud technologies, and in particular, to a virtual machine startup acceleration method and a related device thereof.

### BACKGROUND

In a cloud service system, the most important part is to start and release virtual machines based on user requirements. With rapid development of the Internet, a large amount of service traffic is generated when user applications are running. Therefore, a large quantity of virtual machines need to be started in the cloud service system to process increasing traffic generated by these applications.

Currently, the cloud service system includes a storage pool and a computing pool. The storage pool includes image caches and a plurality of system disks allocated to a plurality of virtual machines. The computing pool includes a plurality of virtual machines. When several virtual machines need to be created and started, for any one of the virtual machines, a system disk allocated to the virtual machine usually needs to be enabled to access an image cache, so as to pull required image data. Then, the system disk may be enabled to return image data to the virtual machine, so that the virtual machine is started.

However, startup processes of other virtual machines in the several virtual machines are similar to a startup process of the virtual machine. Therefore, all system disks allocated to these virtual machines access the image caches and pull image data. Consequently, the image cache is accessed for too many times, causing hot spots in the image cache.

### SUMMARY

Embodiments of this application provide a virtual machine startup acceleration method and a related device thereof, to significantly reduce a quantity of times that an image cache is accessed, avoiding hot spots in the image cache.

A first aspect of embodiments of this application provides a virtual machine startup acceleration method. The method includes:

When a first virtual machine needs to be created and started, the first virtual machine may send a first read request to a first system disk. The first system disk is a system disk allocated to the first virtual machine, that is, a system disk corresponding to the first virtual machine, and the first read request is used to indicate first image data. In addition, a storage process may capture the first read request sent by the first virtual machine to the first system disk. Therefore, based on the first read request, the storage process may determine that the first virtual machine needs to obtain the first image data from the first system disk.

After determining that the first virtual machine needs to obtain the first image data from the first system disk, the storage process may detect that a linked clone volume for managing the first system disk is a lazy loading volume that stores some image data. Therefore, the storage process may continue to detect whether the linked clone volume retains the first image data indicated by the first read request.

If it is determined that the linked clone volume does not retain the first image data, the storage process sends a control instruction to the linked clone volume. Based on the control instruction, the linked clone volume may determine that the first image data needs to be read from an image cache. Then, the linked clone volume sends a lazy loading request to the image cache, so that the image cache delivers the first image data to the linked clone volume based on the lazy loading request. After obtaining the first image data, the linked clone volume may store the first image data.

After the linked clone volume obtains the first image data, the storage process may send a control instruction to the linked clone volume. Based on the control instruction, the linked clone volume may send the first image data to the first system disk. After the first system disk obtains the first image data, the storage process may send a control instruction to the first system disk. Based on the control instruction, the first system disk may send the first image data to the first virtual machine. In this way, the first virtual machine may be started based on the first image data.

It can be learned from the foregoing method that: after the first read request of the first virtual machine for the first system disk is received, if it is determined that the linked clone volume for managing the first system disk does not retain the first image data indicated by the first read request, the linked clone volume may be notified to obtain the first image data from the image cache and store the first image data. Then, the linked clone volume may be notified to send the first image data to the first system disk. Then, the first system disk is notified to send the first image data to the first virtual machine. In the foregoing process, for the to-be-started first virtual machine, the first system disk allocated to the first virtual machine preferentially accesses the linked clone volume for managing the first system disk. If the linked clone volume does not retain the first image data required for starting the first virtual machine, the linked clone volume accesses the image cache and pulls the first image data, so that the linked clone volume returns the first image data to the first system disk, so as to return the first image data to the first virtual machine. If the linked clone volume retains the first image data, the linked clone volume does not access the image cache, which significantly reduces a quantity of times that the image cache is accessed and prevents hot spot occurrence in the image cache.

In a possible implementation, that the linked clone volume is notified to obtain the first image data from the image cache and store the first image data includes: if it is determined that the image cache retains the first image data, the linked clone volume is notified to obtain a plurality of pieces of image data from the image cache and store the plurality of pieces of image data, where the plurality of pieces of image data include the first image data. In the foregoing implementation, after determining that the linked clone volume does not retain the first image data, the storage process may first detect whether the image cache retains the first image data. If it is determined that the image cache retains the first image data, the storage process sends an enlarged control instruction to the linked clone volume. Based on the enlarged control instruction, the linked clone volume may determine that a plurality of pieces of image data need to be read from the image cache. Then, the linked clone volume sends an enlarged lazy loading request to the image cache, so that the image cache delivers a plurality of pieces of image data to the linked clone volume based on the enlarged lazy loading request. After obtaining the plurality of pieces of image data, the linked clone volume may store the plurality of pieces of image data.

In a possible implementation, that the linked clone volume is notified to obtain the first image data from the image cache and store the first image data further includes: if it is determined that the image cache does not retain the first image data, the image cache is notified to obtain a plurality of pieces of image data from an image service and store the plurality of pieces of image data, where the plurality of pieces of image data include the first image data; and the linked clone volume is notified to obtain the plurality of pieces of image data from the image cache and store the plurality of pieces of image data. In the foregoing implementation, if it is determined that the image cache does not retain the first image data, the storage process first sends an enlarged control instruction to the image cache. Based on the enlarged control instruction, the image cache may determine that the plurality of pieces of image data need to be read from the image service. Then, the image cache may send an enlarged lazy loading request to the remote image service, so that the image service delivers a plurality of pieces of image data to the image cache based on the enlarged lazy loading request. After obtaining the plurality of pieces of image data, the image cache may store the plurality of pieces of image data. After the image cache obtains the plurality of pieces of image data, the storage process may send an enlarged control instruction to the linked clone volume. Based on the enlarged control instruction, the linked clone volume may determine that a plurality of pieces of image data need to be read from the image cache. Then, the linked clone volume sends an enlarged lazy loading request to the image cache, so that the image cache delivers a plurality of pieces of image data to the linked clone volume based on the enlarged lazy loading request. After obtaining the plurality of pieces of image data, the linked clone volume may store the plurality of pieces of image data.

In a possible implementation, the plurality of pieces of image data further include second image data, and after the first system disk is notified to send the first image data to the first virtual machine, the method further includes: receiving a second read request of a second virtual machine for a second system disk; if it is determined that a linked clone volume for managing the second system disk retains the second image data indicated by the second read request, notifying the linked clone volume to send the second image data to the second system disk; and notifying the second system disk to send the second image data to the second virtual machine. In the foregoing implementation, when the second virtual machine needs to be created and started, the second virtual machine may send the second read request to the second system disk in the storage pool. The second system disk is a system disk allocated to the second virtual machine, that is, a system disk corresponding to the second virtual machine; and the second read request is used to indicate the second image data. In addition, the storage process in the storage pool may capture the second read request sent by the second virtual machine to the second system disk. Therefore, based on the second read request, the storage process may determine that the second virtual machine needs to obtain the second image data from the second system disk. After determining that the second virtual machine needs to obtain the second image data from the second system disk, the storage process may detect whether the linked clone volume (the first system disk and the second system disk are managed by a same linked clone volume) retains the second image data indicated by the second read request. Because the plurality of pieces of image data stored in the linked clone volume further include the second image data, the storage process may determine that the linked clone volume retains the second image data. Therefore, the storage process may send a control instruction to the linked clone volume. Based on the control instruction, the linked clone volume may send the second image data to the second system disk. After the second system disk obtains the second image data, the storage process may send a control instruction to the second system disk. Based on the control instruction, the second system disk may send the second image data to the second virtual machine. In this way, the second virtual machine may be started based on the second image data.

In a possible implementation, the linked clone volume is the linked clone base volume, and the first system disk and the second system disk are linked clone child volumes managed by the linked clone base volume. In the foregoing implementation, the linked clone volume may be presented as a linked clone base volume, and the system disk managed by the linked clone volume may be presented as a linked clone child volume managed by the linked clone base volume.

In a possible implementation, the method further includes: if it is determined that the managing linked clone volume retains the first image data, notifying the linked clone volume to send the first image data to the first system disk; and notifying the first system disk to send the first image data to the first virtual machine. In the foregoing implementation, if it is determined that the linked clone volume retains the first image data, the storage process sends a control instruction to the linked clone volume. Based on the control instruction, the linked clone volume may send the first image data to the first system disk. After the first system disk obtains the first image data, the storage process may send a control instruction to the first system disk. Based on the control instruction, the first system disk may send the first image data to the first virtual machine. In this way, the first virtual machine may be started based on the first image data.

A second aspect of embodiments of this application provides a virtual machine startup acceleration apparatus, where the apparatus includes: a first receiving module, configured to receive a first read request of a first virtual machine for a first system disk; a first notification module, configured to: if it is determined that a linked clone volume for managing the first system disk does not retain first image data indicated by the first read request, notify the linked clone volume to obtain the first image data from an image cache and store the first image data; a second notification module, configured to notify the linked clone volume to send the first image data to the first system disk; and a third notification module, configured to notify the first system disk to send the first image data to the first virtual machine.

It can be learned from the foregoing apparatus that: after the first read request of the first virtual machine for the first system disk is received, if it is determined that the linked clone volume for managing the first system disk does not retain the first image data indicated by the first read request, the linked clone volume may be notified to obtain the first image data from the image cache and store the first image data. Then, the linked clone volume may be notified to send the first image data to the first system disk. Then, the first system disk is notified to send the first image data to the first virtual machine. In the foregoing process, for the to-be-started first virtual machine, the first system disk allocated to the first virtual machine preferentially accesses the linked clone volume for managing the first system disk. If the linked clone volume does not retain the first image data required for starting the first virtual machine, the linked clone volume accesses the image cache and pulls the first image data, so that the linked clone volume returns the first image data to the first system disk, so as to return the first image data to the first virtual machine. If the linked clone volume retains the first image data, the linked clone volume does not access the image cache, which significantly reduces a quantity of times that the image cache is accessed and prevents hot spot occurrence in the image cache.

In a possible implementation, the first notification module is configured to: if it is determined that the image cache retains the first image data, notify the linked clone volume to obtain a plurality of pieces of image data from the image cache and store the plurality of pieces of image data, where the plurality of pieces of image data include the first image data.

In a possible implementation, the first notification module is configured to: if it is determined that the image cache does not retain the first image data, notify the image cache to obtain a plurality of pieces of image data from the image service and store the plurality of pieces of image data, where the plurality of pieces of image data include the first image data; and notify the linked clone volume to obtain the plurality of pieces of image data from the image cache and store the plurality of pieces of image data.

In a possible implementation, the plurality of pieces of image data further include second image data, and the apparatus further includes: a second receiving module, configured to receive a second read request of a second virtual machine for a second system disk; a fourth notification module, configured to: if it is determined that the linked clone volume for managing the second system disk retains the second image data indicated by the second read request, notify the linked clone volume to send the second image data to the second system disk; and a fifth notification module, configured to notify the second system disk to send the second image data to the second virtual machine.

In a possible implementation, the linked clone volume is the linked clone base volume, and the first system disk and the second system disk are linked clone child volumes managed by the linked clone base volume.

In a possible implementation, the apparatus further includes: a sixth notification module, configured to: if it is determined that the managing linked clone volume retains the first image data, notify the linked clone volume to send the first image data to the first system disk; and a seventh notification module, configured to notify the first system disk to send the first image data to the first virtual machine.

A third aspect of embodiments of this application provides a virtual machine startup acceleration apparatus. The apparatus includes a memory and a processor. The memory stores code, and the processor is configured to execute the code. When the code is executed, the apparatus performs the method according to any one of the first aspect or the possible implementations of the first aspect.

A fourth aspect of embodiments of this application provides a computer storage medium. The computer storage medium stores one or more instructions. When the instructions are executed by one or more computers, the one or more computers are enabled to perform the method according to any one of the first aspect or the possible implementations of the first aspect.

A fifth aspect of embodiments of this application provides a computer program product. The computer program product stores instructions, and when the instructions are executed by a computer, the computer is enabled to perform the method according to any one of the first aspect or the possible implementations of the first aspect.

In this embodiment of this application, after the first read request of the first virtual machine for the first system disk is received, if it is determined that the linked clone volume for managing the first system disk does not retain the first image data indicated by the first read request, the linked clone volume may be notified to obtain the first image data from the image cache and store the first image data. Then, the linked clone volume may be notified to send the first image data to the first system disk. Then, the first system disk is notified to send the first image data to the first virtual machine. In the foregoing process, for the to-be-started first virtual machine, the first system disk allocated to the first virtual machine preferentially accesses the linked clone volume for managing the first system disk. If the linked clone volume does not retain the first image data required for starting the first virtual machine, the linked clone volume accesses the image cache and pulls the first image data, so that the linked clone volume returns the first image data to the first system disk, so as to return the first image data to the first virtual machine. If the linked clone volume retains the first image data, the linked clone volume does not access the image cache, which significantly reduces a quantity of times that the image cache is accessed and prevents hot spot occurrence in the image cache.

### BRIEF DESCRIPTION OF DRAWINGS

FIG. 1 is a diagram of a structure of a cloud service system according to an embodiment of this application;
FIG. 2 is another diagram of a structure of a cloud service system according to an embodiment of this application;
FIG. 3 is a schematic flowchart of a virtual machine startup acceleration method according to an embodiment of this application;
FIG. 4 is another diagram of a structure of a cloud service system according to an embodiment of this application;
FIG. 5 is a diagram of a structure of a virtual machine startup acceleration apparatus according to an embodiment of this application; and
FIG. 6 is another diagram of a structure of a virtual machine startup acceleration apparatus according to an embodiment of this application.

### DESCRIPTION OF EMBODIMENTS

Embodiments of this application provide a virtual machine startup acceleration method and a related device thereof, to significantly reduce a quantity of times that an image cache is accessed, preventing hot spot occurrence in the image cache.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

In a cloud service system, the most important part is to start and release virtual machines based on user requirements. With rapid development of the Internet, a large amount of service traffic is generated when user applications are running. Therefore, a large quantity of virtual machines need to be started in the cloud service system to process increasing traffic generated by these applications.

Currently, the cloud service system includes a storage pool and a computing pool. The storage pool includes an image cache and a plurality of system disks allocated to a plurality of virtual machines (a plurality of virtual machines are usually in one-to-one correspondence with a plurality of system disks). The computing pool includes a plurality of virtual machines. When several virtual machines need to be created and started, for any one of the virtual machines, a system disk allocated to the virtual machine usually needs to be enabled to access an image cache, so as to pull required image data. Then, the system disk may be enabled to return image data to the virtual machine, so that the virtual machine is started. For other virtual machines in the several virtual machines, startup processes of these virtual machines are similar to a startup process of the virtual machine, and details are not described herein again.

However, startup processes of the several virtual machines are similar. Therefore, all system disks allocated to these virtual machines access the image cache and pull image data. Consequently, the image cache is accessed for too many times, causing hot spots in the image cache.

Further, when different system disks pull the image data from the image cache, the image data is usually pulled at a granularity of 2 MB, which occupies a relatively high bandwidth. However, when different virtual machines are started, most required image data is the same, which causes a serious waste of bandwidth.

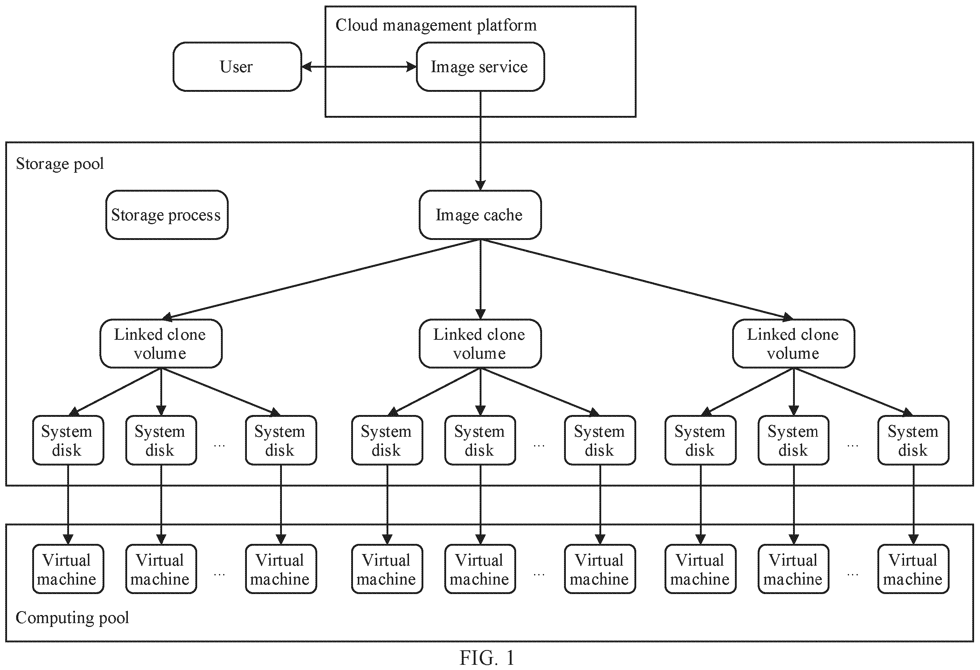

To resolve the foregoing problem, an embodiment of this application provides a virtual machine startup acceleration method. The method may be applied to a cloud service system. As shown in FIG. 1 (FIG. 1 is a diagram of a structure of a cloud service system according to an embodiment of this application), the cloud service system includes a cloud management platform, a storage pool, and a computing pool. The cloud management platform includes an image service. The storage pool includes a storage process, an image cache, a plurality of linked clone (linked clone, LC) volumes, and a plurality of system disks. The computing pool includes a plurality of virtual machines (virtual machine, VM). The following describes these concepts.

The cloud management platform includes functional modules such as the image service. The image service may be oriented to an image provider and an image user, and provide an interface (for example, a user interface) for the image provider and the image user, to receive, by using the interface, requests sent by the image provider and the image user, and complete corresponding processing based on the requests. For example, the image service may provide an upload interface for the image provider, and the image provider may upload an image to the image service by using the upload interface, so that the image service stores an image (that is, image data) created by the image provider. For another example, the image service may provide a download interface for the image user, and the image user may send an image download request to the image service by using the download interface, so that the image service sends, based on the request, an image required by the image user to the image user. In addition, the image service may also be oriented to the storage pool, and provide a service for the image cache in the storage pool. Description is not expanded first herein.

The storage pool includes a storage process, an image cache, a plurality of linked clone volumes, and a plurality of system disks (the plurality of system disks may be divided into a plurality of groups of system disks). The storage process may manage and schedule the image cache, the linked clone volumes and the system disks. The image cache is connected to the plurality of linked clone volumes, and the image cache may provide image data for the plurality of linked clone volumes. For any linked clone volume in the plurality of linked clone volumes, the linked clone volume may manage a group of system disks, where the group of system disks corresponds to a group of virtual machines in the computing pool. Therefore, the group of system disks is equivalent to differential storage resources allocated to the group of virtual machines, and the linked clone volume for managing the group of system disks is equivalent to shared storage resources allocated to the group of virtual machines. It should be noted that in this embodiment of this application, the linked clone volume may be presented as a linked clone base volume, and the system disk managed by the linked clone volume may be presented as a linked clone child volume managed by the linked clone base volume.

The computing pool includes a plurality of virtual machines. In the virtual machines, one virtual machine corresponds to one system disk in the storage pool. It should be noted that, for any virtual machine in the plurality of virtual machines, when the virtual machine is started, the virtual machine may obtain, by using some or all of a system disk allocated to the virtual machine, a linked clone volume for managing the system disk, an image cache, and an image service, image data required for starting, so as to complete startup of the virtual machine based on the obtained image data. Description is not expanded first herein.

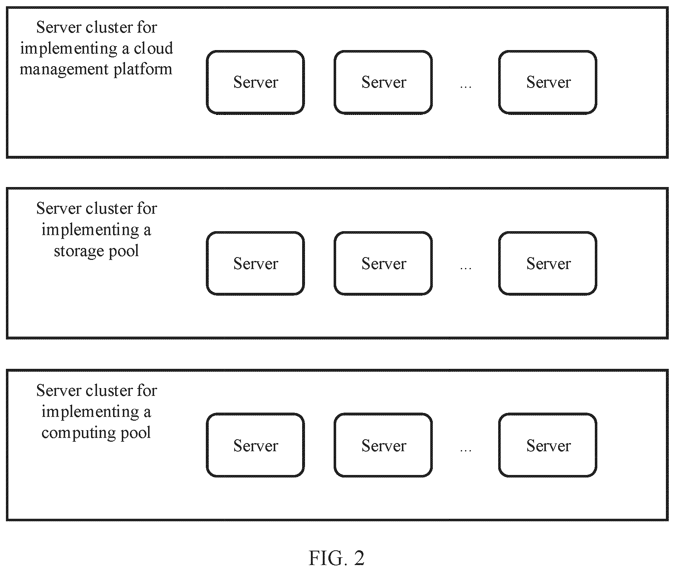

It should be noted that the cloud management platform, the storage pool, and the computing pool are all implemented by using physical hardware such as one or more servers in combination with a virtualization technology, and storage is usually physically isolated between a server used to support the cloud management platform, a server used to support the storage pool, and a server used to support the computing pool, as shown in FIG. 2 (FIG. 2 is another diagram of a structure of a cloud service system according to an embodiment of this application).

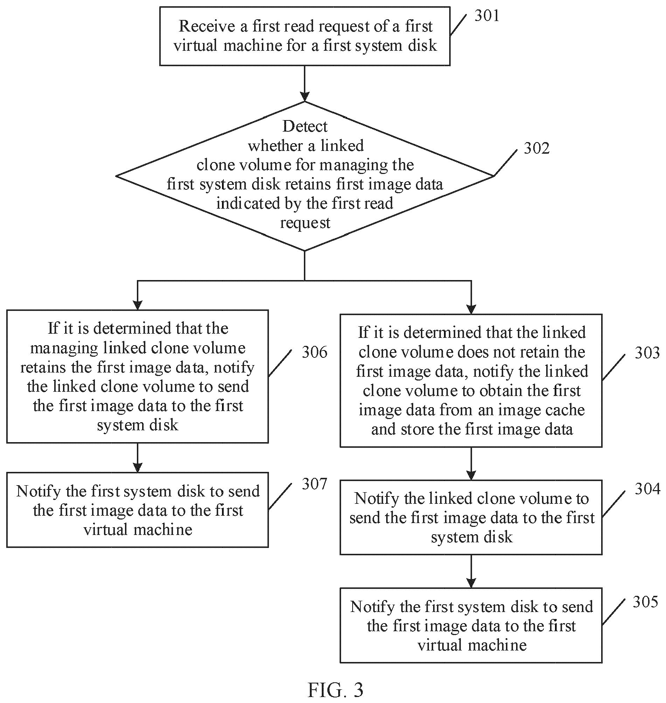

To further understand the foregoing virtual machine startup process, the following further describes the process with reference to FIG. 3. FIG. 3 is a schematic flowchart of a virtual machine startup acceleration method according to an embodiment of this application. As shown in FIG. 3, the method includes the following steps.

301: Receive a first read request of a first virtual machine for a first system disk.

In this embodiment, when the first virtual machine in the computing pool needs to be created and started, the first virtual machine may send the first read request to the first system disk in the storage pool. The first system disk is a system disk allocated to the first virtual machine, that is, a system disk corresponding to the first virtual machine. The first read request indicates (requests) first image data. The first image data may be image data in a specified image. The image may be usually divided into a large amount of image data (that is, a large quantity of data blocks) according to a specific size.

In addition, a storage process in the storage pool may capture the first read request sent by the first virtual machine to the first system disk. Therefore, based on the first read request, the storage process may determine that the first virtual machine needs to obtain the first image data from the first system disk.

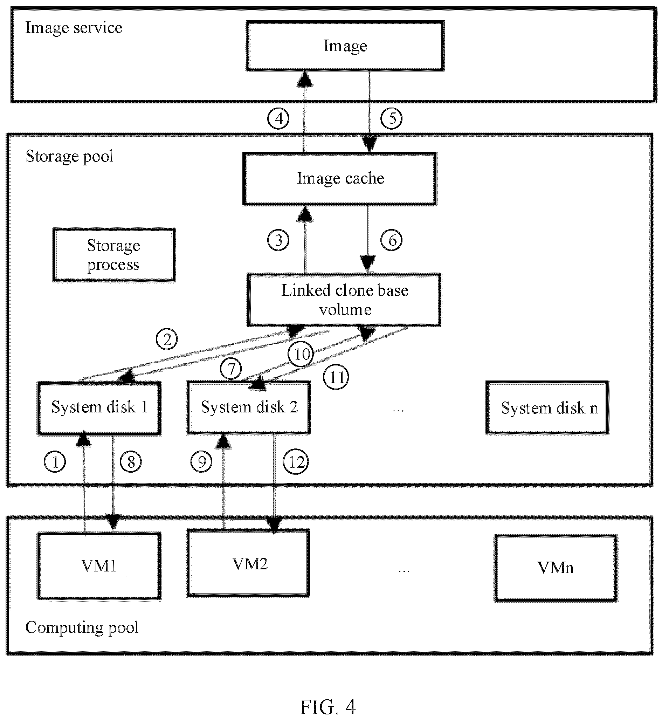

For example, as shown in FIG. 4 (FIG. 4 is another diagram of a structure of a cloud service system according to an embodiment of this application), it is assumed that the computing pool includes a group of virtual machines: a virtual machine 1, a virtual machine 2, ..., and a virtual machine n, the storage pool includes a group of system disks: a system disk 1, a system disk 2, ..., and a system disk n, and the storage pool further includes a storage process, an image cache, and a linked clone base volume for managing the system disk 1 to the system disk n. The virtual machine 1 corresponds to the system disk 1, the virtual machine 2 corresponds to the system disk 2, ..., and the virtual machine n corresponds to the system disk n.

As shown by an arrow 1 in FIG. 4, when the virtual machine 1 needs to be created and started, the virtual machine 1 may send a read request 1 to the system disk, where the read request 1 is used to indicate image data 1 sized 4 KB. In this case, the storage process may capture the read request 1, so as to determine that the virtual machine 1 needs to read the image data 1 from the system disk 1.

302: Detect whether a linked clone volume for managing the first system disk retains the first image data indicated by the first read request.

After determining that the first virtual machine needs to obtain the first image data from the first system disk, the storage process may detect that the linked clone volume for managing the first system disk is a lazy loading volume that stores some image data. Therefore, the storage process may continue to detect whether the linked clone volume retains the first image data indicated by the first read request.

Still as shown in the foregoing example, as shown by an arrow 2 in FIG. 4, after determining that the virtual machine 1 needs to read the image data 1 from the system disk 1, the storage process may detect whether the linked clone base volume for managing the system disk 1 retains the image data 1.

303: If it is determined that the linked clone volume does not retain the first image data, notify the linked clone volume to obtain the first image data from the image cache and store the first image data.

If it is determined that the linked clone volume does not retain the first image data, the storage process sends a control instruction (the control instruction points to the image cache, and the control instruction is used to indicate the first image data) to the linked clone volume. Based on the control instruction, the linked clone volume may determine that the first image data needs to be read from the image cache. Then, the linked clone volume sends a lazy loading request to the image cache (the lazy loading request points to the image cache, and the lazy loading request is used to indicate the first image data), so that the image cache delivers the first image data to the linked clone volume based on the lazy loading request. After obtaining the first image data, the linked clone volume may store the first image data.

Specifically, the linked clone volume may obtain the first image data from the image cache in the following manner:
(1) After determining that the linked clone volume does not retain the first image data, the storage process may first detect whether the image cache retains the first image data.

Still as shown by an arrow 3 in FIG. 4, after determining that the linked clone base volume does not retain the image data 1, the storage process may first check whether the image cache retains the image data 1.

(2) If it is determined that the image cache retains the first image data, the storage process sends an enlarged control instruction to the linked clone volume. Based on the enlarged control instruction (the control instruction points to the image cache, the control instruction is used to indicate a plurality of pieces of image data, and the plurality of pieces of image data include the first image data), the linked clone volume may determine that the plurality of pieces of image data need to be read from the image cache. Then, the linked clone volume sends an enlarged lazy loading request (the lazy loading request points to the image cache, and the lazy loading request is used to indicate the plurality of pieces of image data) to the image cache, so that the image cache delivers the plurality of pieces of image data to the linked clone volume based on the enlarged lazy loading request. After obtaining the plurality of pieces of image data, the linked clone volume may store the plurality of pieces of image data.

Still as shown in the foregoing example, as shown by an arrow 6 in FIG. 4, after determining that the image cache retains the image data 1, the storage process may control the linked clone base volume to send an enlarged lazy loading request to the image cache, where the request is used to indicate data sized 2 MB (including the image data 1, image data 2, ..., and image data m). In this case, the image cache may send the image data 1, the image data 2, ..., and the image data m to the linked clone base volume, so that the linked clone base volume stores the data.

(3) If it is determined that the image cache does not retain the first image data, the storage process first sends an enlarged control instruction (the control instruction points to the image service, the control instruction is used to indicate a plurality of pieces of image data, and the plurality of pieces of image data include the first image data) to the image cache. Based on the enlarged control instruction, the image cache may determine that the plurality of pieces of image data need to be read from the image service. Then, the image cache may send an enlarged lazy loading request (the lazy loading request points to the image service, and the lazy loading request is used to indicate a plurality of pieces of image data) to the remote image service, so that the image service delivers the plurality of pieces of image data to the image cache based on the enlarged lazy loading request. After obtaining the plurality of pieces of image data, the image cache may store the plurality of pieces of image data.

After the image cache obtains the plurality of pieces of image data, the storage process may send an enlarged control instruction to the linked clone volume. Based on the enlarged control instruction (the control instruction points to the image cache, and the control instruction is used to indicate a plurality of pieces of image data), the linked clone volume may determine that the plurality of pieces of image data need to be read from the image cache. Then, the linked clone volume sends an enlarged lazy loading request (the lazy loading request points to the image cache, and the lazy loading request is used to indicate the plurality of pieces of image data) to the image cache, so that the image cache delivers the plurality of pieces of image data to the linked clone volume based on the enlarged lazy loading request. After obtaining the plurality of pieces of image data, the linked clone volume may store the plurality of pieces of image data.

Still as shown in the foregoing example, as shown by an arrow 4 and an arrow 5 in FIG. 4, after determining that the image cache does not retain the image data 1, the storage process may control the image cache to send an enlarged lazy loading request to the image service, where the request is used to indicate data sized 2 MB (including the image data 1, the image data 2, ..., and the image data m). In this case, the image service may send the image data 1, the image data 2, ..., and the image data m to the image cache, so that the image cache stores the data.

As shown by an arrow 6 in FIG. 4, after the image cache reads the image data 1, the image data 2, ..., and the image data m, the storage process may control the linked clone base volume to read the image data 1, the image data 2, ..., and the image data m from the image cache and store the data.

304: Notify the linked clone volume to send the first image data to the first system disk.

After the linked clone volume obtains the first image data, the storage process may send a control instruction to the linked clone volume (the control instruction points to the first system disk, and the control instruction is used to indicate the first image data). Based on the control instruction, the linked clone volume may send the first image data to the first system disk.

Still as shown by an arrow 7 in FIG. 4, after the linked clone base volume obtains the image data 1, the image data 2, ..., and the image data m, the storage process may control the linked clone base volume to send the image data 1 to the system disk 1.

305: Notify the first system disk to send the first image data to the first virtual machine.

After the first system disk obtains the first image data, the storage process may send a control instruction to the first system disk (the control instruction points to the first virtual machine, and the control instruction is used to indicate the first image data). Based on the control instruction, the first system disk may send the first image data to the first virtual machine. In this way, the first virtual machine may be started based on the first image data.

Still as shown in the foregoing example, as shown by an arrow 8 in FIG. 4, after the system disk 1 obtains the image data 1, the storage process may control the system disk 1 to send the image data 1 to the virtual machine 1.

306: If it is determined that the managing linked clone volume retains the first image data, notify the linked clone volume to send the first image data to the first system disk.

If it is determined that the linked clone volume retains the first image data, the storage process sends a control instruction (the control instruction points to the first system disk, and the control instruction is used to indicate the first image data) to the linked clone volume. Based on the control instruction, the linked clone volume may send the first image data to the first system disk.

307: Notify the first system disk to send the first image data to the first virtual machine.

After the first system disk obtains the first image data, the storage process may send a control instruction to the first system disk (the control instruction points to the first virtual machine, and the control instruction is used to indicate the first image data). Based on the control instruction, the first system disk may send the first image data to the first virtual machine. In this way, the first virtual machine may be started based on the first image data.

Further, after the first virtual machine is started, the method may further include:
(1) When a second virtual machine in the computing pool needs to be created and started, the second virtual machine may send a second read request to a second system disk in the storage pool. The second system disk is a system disk allocated to the second virtual machine, that is, a system disk corresponding to the second virtual machine. The second read request is used to indicate second image data; and the second image data may be specific image data in a specified image.

In addition, the storage process in the storage pool may capture the second read request sent by the second virtual machine to the second system disk. Therefore, based on the second read request, the storage process may determine that the second virtual machine needs to obtain the second image data from the second system disk.

Still as shown in the foregoing example, as shown by an arrow 9 in FIG. 4, when the virtual machine 2 needs to be created and started, the virtual machine 2 may send a read request 2 to the system disk, where the read request 2 is used to indicate image data 2 sized 4 KB. In this case, the storage process may capture the read request 2, so as to determine that the virtual machine 2 needs to read the image data 2 from the system disk 2.

(2) After determining that the second virtual machine needs to obtain the second image data from the second system disk, the storage process may detect whether the linked clone volume (the first system disk and the second system disk are managed by a same linked clone volume) retains the second image data indicated by the second read request.

Still as shown in the foregoing example, as shown by an arrow 10 in FIG. 4, after determining that the virtual machine 2 needs to read the image data 2 from the system disk 2, the storage process may detect whether the linked clone base volume for managing the system disk 2 retains the image data 2.

(3) Because the plurality of pieces of image data stored in the linked clone volume further include the second image data, the storage process may determine that the linked clone volume retains the second image data. Therefore, the storage process may send a control instruction to the linked clone volume (the control instruction points to the second system disk, and the control instruction is used to indicate the second image data). Based on the control instruction, the linked clone volume may send the second image data to the second system disk.

Still as shown in the foregoing example, as shown by an arrow 11 in FIG. 4, after the storage process determines that the linked clone base volume retains the image data 2, the storage process may control the linked clone base volume to send the image data 2 to the system disk 2.

(4) After the second system disk obtains the second image data, the storage process may send a control instruction (the control instruction points to the second virtual machine, and the control instruction is used to indicate the second image data) to the second system disk. Based on the control instruction, the second system disk may send the second image data to the second virtual machine. In this way, the second virtual machine may be started based on the second image data.

Still as shown in the foregoing example, as shown by an arrow 12 in FIG. 4, after the system disk 2 obtains the image data 2, the storage process may control the system disk 2 to send the image data 2 to the virtual machine 2.

In this embodiment of this application, after the first read request of the first virtual machine for the first system disk is received, if it is determined that the linked clone volume for managing the first system disk does not retain the first image data indicated by the first read request, the linked clone volume may be notified to obtain the first image data from the image cache and store the first image data. Then, the linked clone volume may be notified to send the first image data to the first system disk. Then, the first system disk is notified to send the first image data to the first virtual machine. In the foregoing process, for the to-be-started first virtual machine, the first system disk allocated to the first virtual machine preferentially accesses the linked clone volume for managing the first system disk. If the linked clone volume does not retain the first image data required for starting the first virtual machine, the linked clone volume accesses the image cache and pulls the first image data, so that the linked clone volume returns the first image data to the first system disk, so as to return the first image data to the first virtual machine. If the linked clone volume retains the first image data, the linked clone volume does not access the image cache, which significantly reduces a quantity of times that the image cache is accessed and prevents hot spot occurrence in the image cache.

Further, for a plurality of system disks (for example, the first system disk and the second system disk) managed (created) by a same linked clone volume, if there is only one system disk (for example, the first system disk) in the plurality of system disks, the linked clone volume triggers lazy loading, and pulls a plurality of pieces of image data (for example, the first image data and the second image data) from the image cache. In this case, if other system disks (for example, the second system disk) are required, the image data only needs to be directly read from the linked clone volume. In this way, bandwidth can be effectively used.

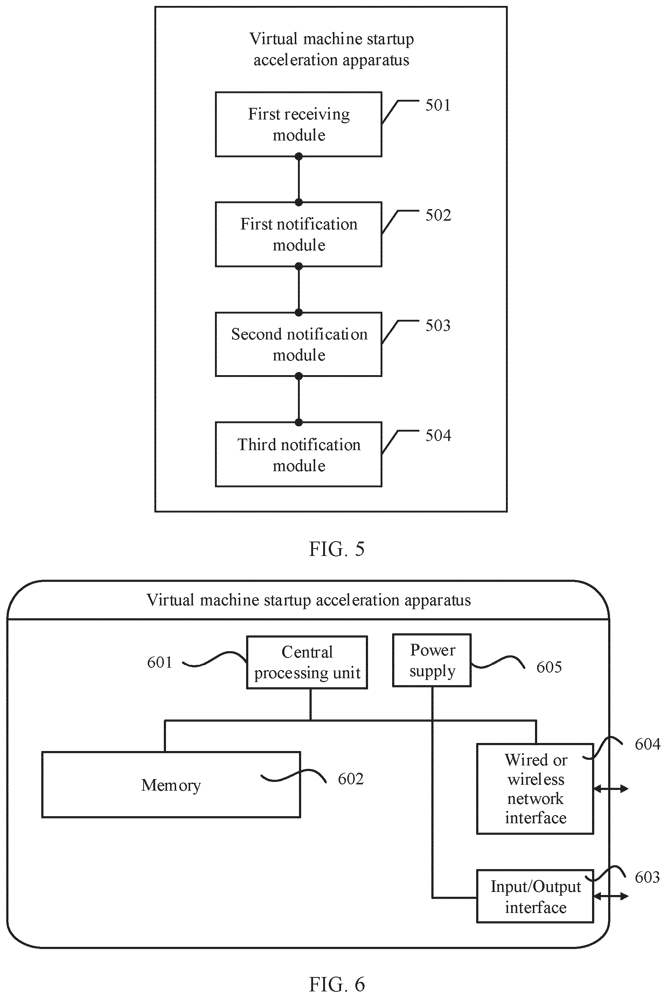

The foregoing has described in detail the virtual machine startup acceleration method provided in embodiments of this application. The following describes a virtual machine startup acceleration apparatus provided in embodiments of this application. FIG. 5 is a diagram of a structure of a virtual machine startup acceleration apparatus according to an embodiment of this application. As shown in FIG. 5, the apparatus includes:
a first receiving module 501, configured to receive a first read request of a first virtual machine for a first system disk (for example, the first receiving module 501 may implement step 301 in the embodiment shown in FIG. 3);
a first notification module 502, configured to: if it is determined that a linked clone volume for managing the first system disk does not retain first image data indicated by the first read request, notify the linked clone volume to obtain the first image data from an image cache and store the first image data (for example, the first notification module 502 may implement step 303 in the embodiment shown in FIG. 3);
a second notification module 503, configured to notify the linked clone volume to send the first image data to the first system disk (for example, the second notification module 503 may implement step 304 in the embodiment shown in FIG. 3); and
a third notification module 504, configured to notify the first system disk to send the first image data to the first virtual machine (for example, the third notification module 504 may implement step 305 in the embodiment shown in FIG. 3).

In this embodiment of this application, after the first read request of the first virtual machine for the first system disk is received, if it is determined that the linked clone volume for managing the first system disk does not retain the first image data indicated by the first read request, the linked clone volume may be notified to obtain the first image data from the image cache and store the first image data. Then, the linked clone volume may be notified to send the first image data to the first system disk. Then, the first system disk is notified to send the first image data to the first virtual machine. In the foregoing process, for the to-be-started first virtual machine, the first system disk allocated to the first virtual machine preferentially accesses the linked clone volume for managing the first system disk. If the linked clone volume does not retain the first image data required for starting the first virtual machine, the linked clone volume accesses the image cache and pulls the first image data, so that the linked clone volume returns the first image data to the first system disk, so as to return the first image data to the first virtual machine. If the linked clone volume retains the first image data, the linked clone volume does not access the image cache, which significantly reduces a quantity of times that the image cache is accessed and prevents hot spot occurrence in the image cache.

In a possible implementation, the first notification module 502 is configured to: if it is determined that the image cache retains the first image data, notify the linked clone volume to obtain a plurality of pieces of image data from the image cache and store the plurality of pieces of image data, where the plurality of pieces of image data include the first image data.

In a possible implementation, the first notification module 502 is configured to: if it is determined that the image cache does not retain the first image data, notify the image cache to obtain a plurality of pieces of image data from the image service and store the plurality of pieces of image data, where the plurality of pieces of image data include the first image data; and notify the linked clone volume to obtain the plurality of pieces of image data from the image cache and store the plurality of pieces of image data.

In a possible implementation, the plurality of pieces of image data further include second image data, and the apparatus further includes: a second receiving module, configured to receive a second read request of a second virtual machine for a second system disk; a fourth notification module, configured to: if it is determined that the linked clone volume for managing the second system disk retains the second image data indicated by the second read request, notify the linked clone volume to send the second image data to the second system disk; and a fifth notification module, configured to notify the second system disk to send the second image data to the second virtual machine.

In a possible implementation, the linked clone volume is the linked clone base volume, and the first system disk and the second system disk are linked clone child volumes managed by the linked clone base volume.

In a possible implementation, the apparatus further includes: a sixth notification module, configured to: if it is determined that the managing linked clone volume retains the first image data, notify the linked clone volume to send the first image data to the first system disk; and a seventh notification module, configured to notify the first system disk to send the first image data to the first virtual machine.

It should be noted that content such as information exchange between the modules/units of the apparatuses and an execution process is based on the same concept as the method embodiments of this application, and produces the same technical effect as those of the method embodiments of this application. For specific content, refer to the foregoing descriptions in the method embodiments of this application. Details are not described herein again.

FIG. 6 is another diagram of a structure of a virtual machine startup acceleration apparatus according to an embodiment of this application. As shown in FIG. 6, an embodiment of a virtual machine startup acceleration apparatus may include one or more central processing units 601, a memory 602, an input/output interface 603, a wired or wireless network interface 604, and a power supply 605.

The memory 602 may perform transient storage or persistent storage. Further, the central processing unit 601 may be configured to communicate with the memory 602, and perform, on the virtual machine startup acceleration apparatus, a series of instruction operations in the memory 602.

In this embodiment, the central processing unit 601 may perform the method steps in the embodiment shown in FIG. 3, and details are not described herein again.

In this embodiment, division into specific functional modules in the central processing unit 601 may be similar to division into the modules described in FIG. 5, and details are not described herein again.

An embodiment of this application further relates to a computer storage medium. The computer-readable storage medium stores a program used for signal processing. When the program runs on a computer, the computer is enabled to perform the steps in the embodiment shown in FIG. 3.

An embodiment of this application further relates to a computer program product. The computer program product stores instructions, and when the instructions are executed by a computer, the computer is enabled to perform the steps in the embodiment shown in FIG. 3.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for notifying a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A virtual machine startup acceleration method, wherein the method comprises:
Receiving a first read request of a first virtual machine for a first system disk;
if it is determined that a linked clone volume for managing the first system disk does not retain first image data indicated by the first read request, notifying the linked clone volume to obtain the first image data from an image cache and store the first image data;
notifying the linked clone volume to send the first image data to the first system disk; and
notifying the first system disk to send the first image data to the first virtual machine.

2. The method according to claim 1, wherein notifying the linked clone volume to obtain the first image data from the image cache and store the first image data comprises:
if it is determined that the image cache retains the first image data, notifying the linked clone volume to obtain a plurality of pieces of image data from the image cache and store the plurality of pieces of image data, wherein the plurality of pieces of image data comprise the first image data.

3. The method according to claim 2, wherein notifying the linked clone volume to obtain the first image data from the image cache and store the first image data further comprises:
if it is determined that the image cache does not retain the first image data, notifying the image cache to obtain a plurality of pieces of image data from an image service and store the plurality of pieces of image data, wherein the plurality of pieces of image data comprise the first image data; and
notifying the linked clone volume to obtain the plurality of pieces of image data from the image cache and store the plurality of pieces of image data.

4. The method according to claim 2 or 3, wherein the plurality of pieces of image data further comprise second image data, and after notifying the first system disk to send the first image data to the first virtual machine, the method further comprises:
receiving a second read request of a second virtual machine for a second system disk;
if it is determined that the linked clone volume for managing the second system disk retains the second image data indicated by the second read request, notifying the linked clone volume to send the second image data to the second system disk; and
notifying the second system disk to send the second image data to the second virtual machine.

5. The method according to claim 4, wherein the linked clone volume is the linked clone base volume, and the first system disk and the second system disk are linked clone child volumes managed by the linked clone base volume.

6. The method according to any one of claims 1 to 5, wherein the method further comprises:
if it is determined that the managing linked clone volume retains the first image data, notifying the linked clone volume to send the first image data to the first system disk; and
notifying the first system disk to send the first image data to the first virtual machine.

7. A virtual machine startup acceleration apparatus, wherein the apparatus comprises:
a first receiving module, configured to receive a first read request of a first virtual machine for a first system disk;
a first notification module, configured to: if it is determined that a linked clone volume for managing the first system disk does not retain first image data indicated by the first read request, notify the linked clone volume to obtain the first image data from an image cache and store the first image data;
a second notification module, configured to notify the linked clone volume to send the first image data to the first system disk; and
a third notification module, configured to notify the first system disk to send the first image data to the first virtual machine.

8. The apparatus according to claim 7, wherein the first notification module is configured to: if it is determined that the image cache retains the first image data, notify the linked clone volume to obtain a plurality of pieces of image data from the image cache and store the plurality of pieces of image data, wherein the plurality of pieces of image data comprise the first image data.

9. The apparatus according to claim 8, wherein the first notification module is further configured to:
if it is determined that the image cache does not retain the first image data, notify the image cache to obtain a plurality of pieces of image data from an image service and store the plurality of pieces of image data, wherein the plurality of pieces of image data comprise the first image data; and
notify the linked clone volume to obtain the plurality of pieces of image data from the image cache and store the plurality of pieces of image data.

10. The apparatus according to claim 8 or 9, wherein the plurality of pieces of image data further comprise second image data, and the apparatus further comprises:
a second receiving module, configured to receive a second read request of a second virtual machine for a second system disk;
a fourth notification module, configured to: if it is determined that the linked clone volume for managing the second system disk retains the second image data indicated by the second read request, notify the linked clone volume to send the second image data to the second system disk; and
a fifth notification module, configured to notify the second system disk to send the second image data to the second virtual machine.

11. The apparatus according to claim 10, wherein the linked clone volume is the linked clone base volume, and the first system disk and the second system disk are linked clone child volumes managed by the linked clone base volume.

12. The apparatus according to any one of claims 7 to 11, wherein the apparatus further comprises:
a sixth notification module, configured to: if it is determined that the managing linked clone volume retains the first image data, notify the linked clone volume to send the first image data to the first system disk; and
a seventh notification module, configured to notify the first system disk to send the first image data to the first virtual machine.

13. A virtual machine startup acceleration apparatus, wherein the apparatus comprises a memory and a processor, the memory stores code, the processor is configured to execute the code, and when the code is executed, the apparatus performs the method according to any one of claims 1 to 6.

14. A computer storage medium, wherein the computer storage medium stores one or more instructions, and when the one or more instructions are executed by one or more computers, the one or more computers are enabled to perform the method according to any one of claims 1 to 6.

15. A computer program product, wherein the computer program product stores instructions, and when the instructions are executed by a computer, the computer is enabled to perform the method according to any one of claims 1 to 6.
